# EUROPEAN PATENT APPLICATION

(11) **EP 3 187 858 A1**
(43) Date of publication of application: **05.07.2017**
(21) Application number: 15461591.8
(22) Date of filing: 31.12.2015
(51) Int. Cl.: G01N 21/87

(54) **A METHOD OF EXAMINING A GEMSTONE**

(71) Applicant: Mode S.A., 80-534 Gdansk (PL)
(72) Inventor: Bator, Mikolaj, 83-010 Rotmanka (PL)
(74) Representative: Sielewiesiuk, Jakub

(57) **Abstract**

The invention relates to a method of examining a gemstone that comprises the steps of analysing at least one image of the gemstone by checking a pattern characteristics, and assigning a quality class of the gemstone based on the pattern characteristics analysis.

The invention also relates to computer program adapted to perform the method according to the invention, a computer readable storage medium comprising the program and system for examining a gemstone.

## Description

### Technical filed

The present invention relates to a method of examining a gemstones, especially a diamonds.

### Background

Hearts and Arrows diamonds are precision-cut variations of the traditional 57 faceted round brilliant cut. They are cut to ideal proportions with good optical symmetry, polish and a specific faceting pattern. When all these factors are present, the result is a repeatable, near perfect pattern of eight symmetrical arrows in the face-up position of the stone (called 'crown') and eight symmetrical hearts when viewed in the table-down position (called 'pavilion').

H&A diamonds are not only cut to ideal proportions but must also have superior physical and optical symmetry with very specific facet placement and limited proportion sets in order to produce the perfect hearts and arrow pattern. In fact, the faceting arrangement is extremely important in order to have the H&A visual effect and must be cut to very precise mathematical proportions. This means that all hearts and arrows diamond bezel, star, upper girdle, lower girdle, and pavilion main facets have to be precisely aligned to 180 degrees opposite of each other. If not, the appearance of the "H&A" pattern will be faded, incomplete, distorted, or misaligned in its appearance. The effect of this precision creates a balance between optimum brilliance and scattering of light.

A Super Ideal H&A has the following cut proportions:
Table Size: 53% to 58% of the diameter (54 to 57 is favorable)Depth: 60% to 61.7% of diameter
Crown Angle: 33.4 to 36.4 degrees (34 - 35 degrees is favorable)
Pavilion Angle: 40.2 to 41.2 (40.6 to 40.8 degrees is favorable)
Lower Girdle Half: 75 - 80% (77% is favorable)
Star Facets: 40 - 58% (45 -50% is favorable)
Girdle Thickness: thin to slightly thick
Facets: 58 (57 if the culet is excluded)
Polish & Symmetry: ideal

A standard "ideal cut" diamond can take on average an hour to polish. Compare this to a H&A ideal cut diamond that can take up to four days! These diamonds are obviously more costly to produce than regular round or even a standard ideal cut diamond.

With both the diamond industry continuing to advance in diamond cutting technology as well as consumers properly educating themselves before making a diamond purchase, more and more people will choose to invest their money in a premium Super Ideal cut stone.

If consumers knew that investing in a diamond's cut is the most important characteristic when choosing a diamond, then there would be no reason to accept an inferior or poorly cut diamond. However, there are limited ways for a consumer to know whether or not a diamond is a well cut H&A diamond. One way is obtaining a professional diamond grading report, like for example AGS's Platinum DQD (American Gemological Society - Diamond Quality Document), the other is just buying a reputable jeweler.

### Summary

Therefore an object of the present invention is to provide a system and the method for of examining a gemstone which id cheap and available for consumers.

The invention relates to a method of examining a gemstone, characterised in that it comprises the steps of:
- analysing at least one image of the gemstone by checking a pattern characteristics, and
- assigning a quality class of the gemstone based on the pattern characteristics analysis.

Preferably the method further comprises the step of generating the information comprising the view of the gemstone and the quality class of the gemstone.

Preferably the gemstone is a diamond.

Preferably the pattern characteristics is a hearts and arrows characteristics.

Preferably the analysis comprises the steps of:
- checking if there are 8 equal uniformed symmetrical hearts,
- checking if there are 8 distinct symmetrical hearts that separate from the arrowheads above,
- checking if the hearts are split,
- measuring length of heart then the length of the split,
- calculating the % of the length split.

Preferably the analysis comprises the steps of:
- checking if each of 8 arrows is clearly visible with a shaft and arrow head,
- checking if 8 arrows shafts as well as heads are straight and in the right position,
- checking if 8 arrow points meet the girdle.

The invention also relates to computer program adapted to perform the method according to the invention and a computer readable storage medium comprising the program.

The invention also relates to system for examining a gemstone, characterised in that it comprises:
- an apparatus for obtaining an image of the gemstone,
- a processing unit adapted to perform said computer program.

Preferably the system further comprises a screen for displaying quality class assigned to the gemstone.

### Example

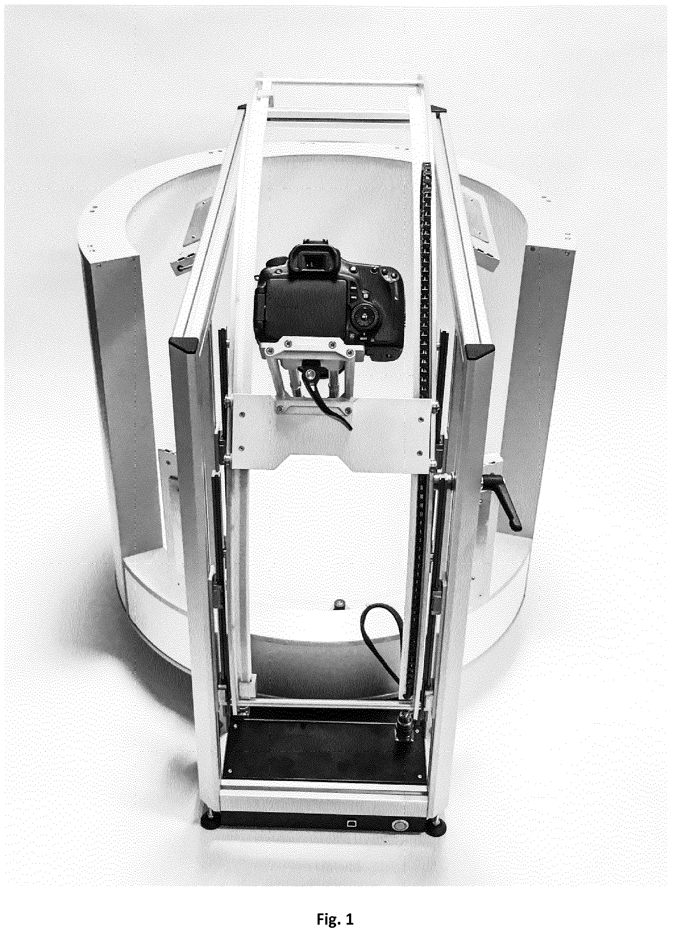

At least two images of a diamond are obtained - in the face-up position of the stone (called 'crown') and in the table-down position (called 'pavilion'), by means of a Photo Composer (shown on fig. 1) offered by Mode S.A. (http://mode360.eu/) or other apparatus suitable for obtaining an image of the gemstone.

The images are then uploaded to a PC or a smartphone with an app dedicated to analysing the hearts and arrows characteristics.

The step of analysing comprises the following steps:
1. Examining the image obtain in the table-down position:
   - checking if there are 8 equal uniformed symmetrical hearts (if yes, the value of 1 is assigned, if no, the value of 0 is assigned)
   - checking if there are 8 distinct symmetrical hearts that separate from the arrowheads above (if yes, the value of 1 is assigned, if no, the value of 0 is assigned),
   - checking if the hearts are split (if yes, the value of 1 is assigned, if no, the value of 0 is assigned),
   - measuring length of heart then the length of the split and calculating the % of the length split (if it is greater than 8% and there are more than 2 of them the value of 0 is assigned, otherwise, the value of 1 is assigned).
2. Examining the image obtain in the table-down position:
   - checking if each of 8 arrows is clearly visible with a shaft and arrow head (if yes, the value of 1 is assigned, if no, the value of 0 is assigned),
   - checking if 8 arrows shafts as well as heads are straight and in the right position (if yes, the value of 1 is assigned, if no, the value of 0 is assigned),
   - checking if 8 arrow points meet the girdle (if yes, the value of 1 is assigned, if no, the value of 0 is assigned).

After all the characteristics are checked, the final value is calculated, by multiplying all the values assigned during examination. If the result is 1, then a quality class "excellent" is assigned. If the result is zero, then a quality class "not a H&A" is assigned. The quality class assigned to the diamond is displayed on a screen of the PC or smartphone.

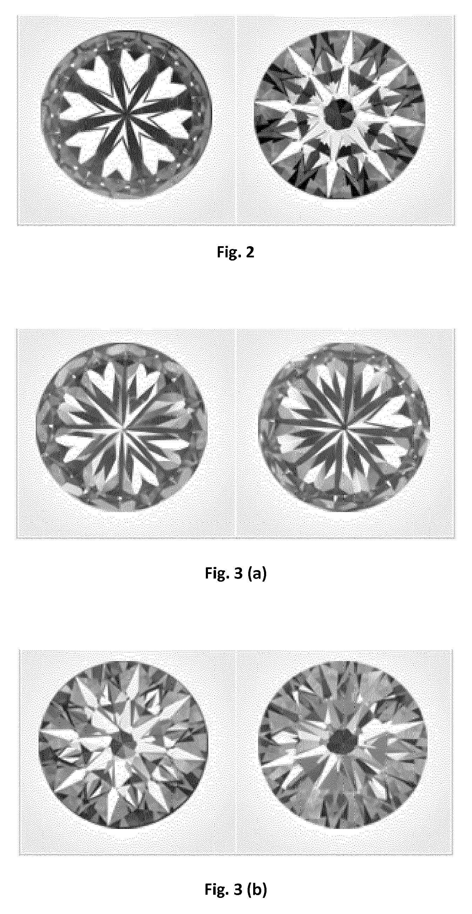

The example of an images of diamond of a quality class "excellent" is shown on a fig. 2, whereas a diamond of a quality class "not a H&A" is shown on a fig. 3: (a) bad hearts, (b) bad arrows.

## Claims

1. A method of examining a gemstone, **characterised in that** it comprises the steps of:
- analysing at least one image of the gemstone by checking a pattern characteristics, and
- assigning a quality class of the gemstone based on the pattern characteristics analysis.

2. The method according to clam 1, **characterised in that** it further comprises the step of generating the information comprising the view of the gemstone and the quality class of the gemstone.

3. The method according to clam 1 or 2, **characterised in that** the gemstone is a diamond.

4. The method according to clam 3, **characterised in that** the pattern characteristics is a hearts and arrows characteristics.

5. The method according to claim 4, **characterised in that** the analysis comprises the steps of:
- checking if there are 8 equal uniformed symmetrical hearts,
- checking if there are 8 distinct symmetrical hearts that separate from the arrowheads above,
- checking if the hearts are split,
- measuring length of heart then the length of the split,
- calculating the % of the length split.

6. The method according to claim 4 or 5, **characterised in that** the analysis comprises the steps of:
- checking if each of 8 arrows is clearly visible with a shaft and arrow head,
- checking if 8 arrows shafts as well as heads are straight and in the right position,
- checking if 8 arrow points meet the girdle.

7. A computer program adapted to perform the method of any of claims from 1 to 6.

8. A computer readable storage medium comprising the program of claim 7.

9. A system for examining a gemstone, **characterised in that** it comprises:
- an apparatus for obtaining an image of the gemstone,
- a processing unit adapted to perform a computer program according to clam 7.

10. A system for examining a gemstone according to clam 9, **characterised in that** it further comprises a screen for displaying quality class assigned to the gemstone.
